# EUROPÄISCHE PATENTSCHRIFT

(11) **EP 2 340 968 B1**
(45) Veröffentlichungstag und Bekanntmachung des Hinweises auf die Patenterteilung: **10.09.2014**
(21) Anmeldenummer: 10170600.0
(22) Anmeldetag: 23.07.2010
(51) Int. Cl.: B60R 21/13

(54) **Überrollschutzsystem für Kraftfahrzeuge**
Rollover protection for vehicles
Système de protection contre les tonneaux pour des véhicules automobiles

(43) Veröffentlichungstag der Anmeldung: 06.07.2011
(73) Patentinhaber: Metalsa Automotive GmbH, 51702 Bergneustadt (DE)
(72) Erfinder: Nass, Michael, 51702, Bergneustadt (DE)
(74) Vertreter: Kalkoff & Partner

(56) Entgegenhaltungen:
- EP-A1- 2 216 209
- EP-A2- 1 084 914
- WO-A1-2007/113303
- DE-A1- 19 501 522
- DE-A1-102005 028 966

## Beschreibung

Die Erfindung betrifft ein Überrollschutzsystem für Kraftfahrzeuge, mit
- einer am Kraftfahrzeug anordbaren Führungseinheit,
- einem zwischen einer Lagerungsposition und einer Überschlagsposition verstellbar an der Führungseinheit gelagerten Überrollkörper und
- einer den Überrollkörper im Bedarfsfall aus der Lagerungsposition in die Überschlagsposition verstellenden Antriebseinheit.

Überrollschutzsysteme der eingangs genannten Art sind in vielfältigen Ausgestaltungen aus dem Stand der Technik bekannt. Sie dienen bei Kraftfahrzeugen wie Cabriolets oder Roadstern, bei denen das Dach zwischen einer den Innenraum überdeckenden und einer diesen freigebenden Position verstellbar ist, im Falle eines Überschlages zum Schutz der Insassen, wobei die in der Überschlagsposition aufgestellten Überrollkörper den Insassen einen Überlebensraum bereitstellen, wenn das Fahrzeug beim Überschlag auf den Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, werden vermehrt aktive Überrollschutzsysteme eingesetzt. Bei diesen befinden sich die Überrollkörper im Normalzustand in einer zurückgezogenen, von außen vorzugsweise nicht sichtbaren Lagerungsposition und werden nur im Bedarfsfall, nämlich bei einem drohenden Überschlag in die Überschlagsposition verstellt, in der sie in Verbindung mit der Karosserie einen Überlebensraum bereitstellen.

Überrollkörper, bspw. Überrollbügel, Klappbügel oder Profilkörper, die im Normalzustand hinter den Fahrzeugsitzen von außen im Wesentlichen unsichtbar angeordnet sind und sich im Falle eines Überschlages selbsttätig aufstellen, stellen eine bevorzugte Ausführungsform der aktiven Überrollschutzsysteme dar. Zwingende Voraussetzung für die Einsetzbarkeit aller aktiven Systeme ist dabei, dass die Überrollkörper im Bedarfsfall augenblicklich in die die Insassen schützende Überschlagsposition verlagerbar sind.

Ein derartiger Überrollschutzsystem ist aus der DE 195 01 522 A gemäß Oberbegriff des Anspruchs 1 bekannt.

In der DE 43 42 400 A1 ist ein weit verbreitetes Prinzip eines aktiven Überrollschutzsystems dargestellt. Dieses weist einen in einem fahrzeugfesten Kassettengehäuse geführten U-förmigen oder aus einem Profilkörper gebildeten Überrollkörper auf, der im Normalzustand gegen die Vorspannkraft einer Antriebsdruckfeder durch eine Haltevorrichtung in einer Lagerungsposition gehalten wird und im Überschlagsfall sensorgesteuert unter Lösen der Haltevorrichtung durch die Federkraft in die Überschlagsposition gelangt.

Derartige Überrollschutzsysteme, die eine Aufstellung mittels einer Federvorspannung realisieren, machen den Einsatz einer ausgeklügelten Haltevorrichtung zur Arretierung des Überrollkörpers in der Lagerungsposition erforderlich, da die Haltevorrichtung gleichzeitig derart mit einer sensorgesteuerten Entriegelungseinheit gekoppelt werden muss, die eine zuverlässige Auslösung im Falle eines drohenden Überschlages gewährleistet. Die Vorgaben bedingen hohe Entwicklungs-, sowie Material- und Herstellungskosten.

Der Erfindung liegt die Aufgabe zugrunde, ein Überrollschutzsystem der eingangs genannten Art bereitzustellen, welches sich einfach und kostengünstig herstellen lässt.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass der Überrollkörper, bspw. ein translatorisch verstellbarer Profilkörper oder ein aufstellbarer Klappbügel, und die Führungseinheit derart ausgebildet sind, dass diese in der Lagerungsposition einen abgegrenzten Arbeitsraum bilden, wobei in dem Arbeitsraum ein die Antriebseinheit bildender Gasgenerator angeordnet ist. Unter einem abgegrenzten Arbeitsraum wird dabei im Rahmen der Erfindung ein zumindest während der Auslösung des Gasgenerators im Wesentlichen gasdicht ausgebildeter Raum verstanden, der durch Abschnitte des Überrollkörpers und der Führungseinheit gebildet ist. Der abgegrenzte Arbeitsraum besteht dabei dauerhaft, wenn sich der Überrollkörper in der Lagerungsposition an der Führungseinheit befindet und weist im Vergleich zum Gesamtvolumen des Überrollkörpers bzw. der Führungseinheit ein sehr geringes Volumen auf. Der Arbeitsraum ist dabei derart bemessen, dass eine Auslösung des Gasgenerators innerhalb des Arbeitsraums dazu führt, dass das expandierende Gas den Überrollkörper aus der Lagerungsposition in die Überschlagsposition verstellt, bspw. ein Profilkörper oder einen Klappbügel aufstellt. Aufgrund des geringen Volumens des Arbeitsraumes, in dem durch den Gasgenerator der erforderliche Druck aufgebaut wird, kann dieser mit einer geringen Sprengstoffmenge ausgelegt werden. Die Größe des Arbeitsraumes beträgt dabei vorzugsweise 1 - 10 %, besonders bevorzugt 2 - 7 %, insbesondere 3 - 6 % des Gesamtinnenvolumens des als Hohlkörper ausgebildeten Überrollkörpers.

Die erfindungsgemäße Ausgestaltung des Überrollschutzsystems erlaubt die Herstellung des Überrollschutzsystems mit nur sehr wenigen Bauteilen, da z. B. auf Federvorspannungseinheiten zur Bildung einer Antriebseinheit verzichtet werden kann. Aufgrund des nur geringen Druckaufbaus kann dabei das Gesamtsystem besonders klein aufgebaut werden und erlaubt insbesondere die Verwendung eines Mikrogasgenerators mit einer nur geringen Sprengstoffmenge, so dass eine besonders kostengünstige Herstellung des Systems möglich ist.

Die Ausbildung des Arbeitsraumes durch Abschnitte des Überrollkörpers, bspw. des Profilkörpers oder Schenkel eines Klappbügels und Abschnitte der Führungseinheit kann grundsätzlich in beliebiger Weise an geeigneter Stelle des Überrollschutzsystems erfolgen, sofern gewährleistet ist, dass ein Druckanstieg innerhalb des Arbeitsraumes eine Verstellung des Überrollkörpers aus der Lagerungsposition in die Überschlagsposition bewirkt. Nach einer besonders vorteilhaften Ausgestaltung der Erfindung ist der Arbeitsraum jedoch im Bereich eines Endes des Überrollkörpers ausgebildet. Insoweit bilden vorzugsweise einander zugewandte Stirnflächen der Führungseinheit und des Überrollkörpers gemeinsam mit den angrenzenden Innenflächen den Arbeitsraum. Die Anordnung im Bereich eines Endes, d. h. des oberen oder unteren Endes des Überrollkörpers gemäß dieser Ausgestaltung der Erfindung ermöglicht für diesen Fall insbesondere auch eine stirnseitige Anordnung des Gasgenerators, was einen gleichmäßigen Druckaufbau innerhalb des Arbeitsraumes gewährleistet.

Der Gasgenerator kann dabei grundsätzlich auch an dem Überrollkörper angeordnet sein, ist vorzugsweise gemäß einer weiteren Ausgestaltung der Erfindung jedoch an der Führungseinheit angeordnet. Diese Ausgestaltung der Erfindung gewährleistet, dass der Gasgenerator grundsätzlich ortsfest am Fahrzeug angeordnet ist. Auch im Falle einer Testauslösung bzw. manuellen Verstellung des Überrollkörpers aus der Lagerungsposition in die Überschlagsposition verbleibt der Gasgenerator ortsfest an der Führungseinheit. Auf eine andernfalls erforderliche Ausgestaltung des Überrollschutzsystems mit verstellbarem Gasgenerator, wozu bspw. eine entsprechende Anschlussführung erforderlich wäre, kann verzichtet werden.

Die Ausgestaltung des Arbeitsraumes zumindest in einer während des Druckaufbaus gasdichten Weise kann grundsätzlich in beliebiger Form erfolgen. Grundsätzlich kann bereits durch eine entsprechende Passung von Führungseinheit und Überrollkörper ein ausreichend dichter Arbeitsraum gebildet werden. Nach einer besonders vorteilhaften Ausgestaltung der Erfindung ist jedoch ein Dichtungselement vorgesehen, das an dem einen von Führungseinheit und Überrollkörper angeordnet und an dem anderen von Führungseinheit und Überrollkörper anliegt und so den Arbeitsraum abgrenzt.

Gemäß dieser Ausgestaltung der Erfindung kann der Überrollkörper sowohl an der Führungseinheit als auch an dem Überrollkörper befestigt sein und liegt mit seinen Dichtflächen an der anderen von Führungseinheit und Überrollkörper an. Die Verwendung eines Dichtungselementes ermöglicht es, bei der Herstellung von Überrollkörper und Führungseinheit diese zueinander mit größeren Toleranzen zu fertigen, was eine kostengünstige Herstellung des Überrollschutzsystems erlaubt. Das Dichtungselement kann dabei den Anforderungen entsprechend ausgewählt werden und gewährleistet in besonderer Weise einen gasdicht abgegrenzten Arbeitsraum, so dass besonders zuverlässig eine Aufstellung bzw. eine Verlagerung des Überrollkörpers aus der Lagerungsposition in die Überschlagsposition gewährleistet werden kann.

Die Anordnung des Dichtungselementes an der Führungseinheit oder dem Überrollkörper kann dabei in beliebiger Weise realisiert werden, erfolgt bevorzugt jedoch durch geeignete form- und/oder stoffschlüssige Verbindungen, wobei besonders bevorzugt das Dichtungselement aufgeklipst ist, was eine besonders einfache und kostengünstige Herstellung erlaubt.

Die grundsätzliche Ausgestaltung des Dichtungselements ist dabei, ebenso wie die Materialwahl hierfür, welche in Abhängigkeit von den bestehenden Anforderungen erfolgt, frei wählbar. Nach einer besonders vorteilhaften Ausgestaltung der Erfindung ist das Dichtungselement jedoch derart ausgebildet, dass es in Folge einer Druckerhöhung im Arbeitsraum an das andere von Führungseinheit und Überrollkörper angepresst wird. Gemäß dieser Ausgestaltung der Erfindung, wonach das Dichtungselement einerseits an einem von Führungseinheit und Überrollkörper angeordnet bzw. befestigt ist, ist das Dichtungselement derart ausgebildet, dass es in Folge des Druckaufbaus innerhalb des Arbeitsraumes an das andere von Führungseinheit und Überrollkörper angepresst wird. Der Druckaufbau erfüllt somit nicht allein die Funktion der Verstellung des Überrollkörpers aus der Lagerungsposition in die Überschlagsposition, sondern dient darüber hinaus zur Abdichtung des Arbeitsraumes gegenüber der Umgebung, indem das Dichtungselement durch den Druck angedrückt wird. Durch diese Ausgestaltung wird in besonders zuverlässiger Weise gewährleistet, dass ein ausreichend großer Druck innerhalb des Arbeitsraumes entsteht, welcher zur Verstellung des Überrollkörpers in die Überschlagsposition ausreicht. Nachdem gemäß dieser Ausgestaltung der Erfindung in besonders zuverlässiger Weise einem Druckverlust in Folge von Undichtigkeiten vorgebeugt werden kann, kann der Gasgenerator in ergänzender Weise verkleinert ausgebildet sein.

Die Ausgestaltung des Überrollschutzsystems, insbesondere die Ausgestaltung von Führungseinheit und Überrollkörper, bzw. deren Anordnung aneinander kann grundsätzlich in beliebiger Weise erfolgen. So kann bspw. die Führungseinheit durch einen einenends offenen Kasten gebildet werden, innerhalb dessen der Überrollkörper verfahrbar angeordnet ist. Die Ausbildung eines Arbeitsraumes erfolgt für diesen Fall vorzugsweise im Bereich des Bodens des Kastens und einer dem Boden zugewandten Unterseite des Überrollkörpers, welche in der Lagerungsposition im Bereich des Bodens des Kastens verläuft. Nach einer besonders vorteilhaften Ausgestaltung der Erfindung ist die Führungseinheit jedoch durch einen Führungskolben gebildet, der sich mit seinem oberen Ende im Inneren des Überrollkörpers bis in dessen Kopfbereich erstreckt. Gemäß dieser Ausgestaltung der Erfindung umschließt der Überrollkörper den Führungskolben derart, dass dieser den Überrollkörper während der Verlagerung zwischen der Lagerungsposition und der Überschlagsposition führt. Der Führungskolben erstreckt sich dabei innerhalb des Überrollkörpers bis in dessen Kopfbereich, um über den gesamten Verstellweg eine zuverlässige Führung zu gewährleisten. Die Ausgestaltung des Arbeitsraumes erfolgt für diesen Fall im Kopfbereich des Überrollkörpers, d. h. im Bereich zwischen dem oberen Ende des Führungskolbens und dem den oberen Bereich des Führungskolbens umgebenden Bereich des Überrollkörpers. Diese Ausgestaltung der Erfindung ermöglicht die Ausbildung eines besonders kleinen Arbeitsraumes und somit die Verwendung eines besonders klein dimensionierten und damit kostengünstigen Gasgenerators.

Grundsätzlich ist die Ausgestaltung des Arbeitsraumes durch den Überrollkörper und die Führungseinheit frei wählbar, wobei in einer einfachen Ausgestaltung der Arbeitsraum bspw. durch Abschnitte der Innenfläche der Außenwände des Überrollkörpers und Abschnitte eines im Inneren des Überrollkörpers angeordneten Führungskolbens gebildet werden. Im Falle der Verwendung eines innen liegenden Führungskolbens als Führungseinheit zur Lagerung des Überrollkörpers ist nach einer weiteren Ausgestaltung der Erfindung vorgesehen, dass das Dichtungselement topfartig ausgebildet am oberen Ende des Führungskolbens befestigt und mit seiner Außenfläche an der Innenseite eines im Inneren des Überrollkörpers angeordneten Hülse anliegt. Gemäß dieser Ausgestaltung der Erfindung wird der Arbeitsraum innerhalb einer im Inneren des Überrollkörpers angeordneten Hülse gebildet, welche in ihren Abmessungen an den Führungskolben angepasst ist. In der Lagerungsposition ist die Hülse koaxial zum Führungskolben angeordnet und bildet zwischen dem oberen Ende des Führungskolbens und dem umgebenden Bereich der Hülse sowie einer stirnseitigen Innenfläche des Überrollkörpers einen Arbeitsraum, innerhalb dessen der Gasgenerator angeordnet ist. Das Dichtungselement ist am oberen Ende des Führungskolbens form- und/oder stoffschlüssig befestigt und topfartig ausgebildet, so dass es mit seinen Außenflächen an den Innenflächen der Hülse anliegt. Aufgrund seiner topfartigen Ausgestaltung, wobei das Dichtungselement zum Arbeitsraum hin geöffnet ist, wird in besonders zuverlässiger Weise erreicht, dass im Falle eines Auslösen des Gasgenerators im Inneren des Arbeitsraumes das Dichtungselement an die Innenfläche der Hülse angepresst wird, wodurch der Arbeitsraum während des Verstellvorgangs besonders zuverlässig abgedichtet ist.

Die Anordnung des Gasgenerators, welcher grundsätzlich an beliebiger Stelle innerhalb des Arbeitsraumes angeordnet sein kann, erfolgt dabei nach einer besonders vorteilhaften Ausgestaltung der Erfindung derart, dass der Gasgenerator im Bereich des oberen Endes des Führungskolbens, vorzugsweise mittig innerhalb des durch das Dichtungselement abgegrenzten Arbeitsraumes angeordnet ist. Die mittige Anordnung gewährleistet damit einen gleichmäßigen Druckaufbau innerhalb des Arbeitsraumes und gewährleistet in besonders zuverlässiger Weise für den Fall der Verwendung eines Dichtungselements dessen Anlage an einer Innenseite des Überrollkörpers oder einer verwendeten Hülse.

Zur Aktivierung des Gasgenerators ist es erforderlich, dass dieser über Anschlussleitungen mit einem Auslösesystem verbunden ist. Der Verlauf der Anschlussleitungen kann grundsätzlich in beliebiger Weise erfolgen, wobei nach einer besonders vorteilhaften Ausgestaltung der Erfindung vorgesehen ist, dass eine Anschlussleitung des Gasgenerators innerhalb des Führungskolbens verläuft. Diese Anordnung stellt eine besonders einfache und kostengünstige sowie zugleich wartungsarme und für Beschädigungen unempfindliche Anordnung der Anschlussleitungen dar. Insbesondere bei einer Ausgestaltung des Führungskolbens als Hohlkörper lässt sich der Gasgenerator axial an dem Führungskolben anordnen und die Anschlussleitungen lassen sich innerhalb des Führungskolbens aus diesem herausführen.

Nach einer weiteren Ausbildung der Erfindung sind Haltemittel zur Arretierung des Überrollkörpers in der Ruhelage vorgesehen. Die Haltemittel dienen dazu, den Überrollkörper in der Ruhelage gegen Relativbewegungen zu sichern, welche im Betrieb zu unerwünschten Klappererscheinungen führen können. Die Haltemittel sind dazu derart ausgeführt, dass sie eine sichere Positionierung des Überrollkörpers gegenüber der Führungseinheit gewährleisten.

Die Ausgestaltung des Haltemittels kann dabei grundsätzlich frei gewählt werden, sofern für den Fall eines Auslösens des Gasgenerators gewährleistet ist, dass die Haltemittel eine Verstellung des Überrollkörpers in die Überschlagsposition ermöglichen. Nach einer besonders vorteilhaften Ausgestaltung der Erfindung ist das Haltemittel jedoch durch eine an dem Überrollkörper angeordnete Federklammer gebildet, die in der Ruhelage den Überrollkörper an einer Federklammeraufnahme befestigt. Die Verwendung einer Federklammer gewährleistet in besonders zuverlässiger und gleichzeitig kostengünstiger Weise eine klapperfreie Anordnung des Überrollkörpers an der Führungseinheit. Störende Geräusche während des Betriebes können somit besonders zuverlässig ausgeschlossen werden.

Nach einer weiteren Ausgestaltung der Erfindung ist vorgesehen, dass Arretierungsmittel zur Sicherung des Überrollkörpers in der Überschlagsposition vorgesehen sind. Diese sichern den Überrollkörper in der Überschlagsposition gegen Rückbewegungen des Überrollkörpers in Richtung der Lagerungsposition und gewährleisten somit in besonderem Maße einen ausreichend großen Überlebensraum im Falle eines Überschlags eines mit dem Überrollschutzsystem ausgestatten Kraftfahrzeuges.

Ein Ausführungsbeispiel der Erfindung wird nachstehend mit Bezug auf die Zeichnungen näher erläutert. In den Zeichnungen zeigen:
- Fig. 1: eine Schnittansicht eines Überrollschutzsystems in einer Lagerungsposition eines an einem Führungskolben gelagerten Überrollkörpers;
- Fig. 2: eine vergrößerte Darstellung der Schnittansicht des Überrollschutzsystems von Fig. i;
- Fig. 3: eine Schnittansicht eines Überrollschutzsystems von Fig. 1 in einer Überschlagsposition des an dem Führungskolben gelagerten Überrollkörpers;
- Fig. 4: eine vergrößerte Darstellung der Schnittansicht des Überrollschutzsystems von Fig. 3;
- Fig. 5: eine perspektivische Ansicht des Überrollschutzsystems von Fig. 1 in der Lagerungsposition und
- Fig. 6: eine perspektivische Ansicht eines Überrollschutzsystems von Fig. 1 in der Überschlagsposition.

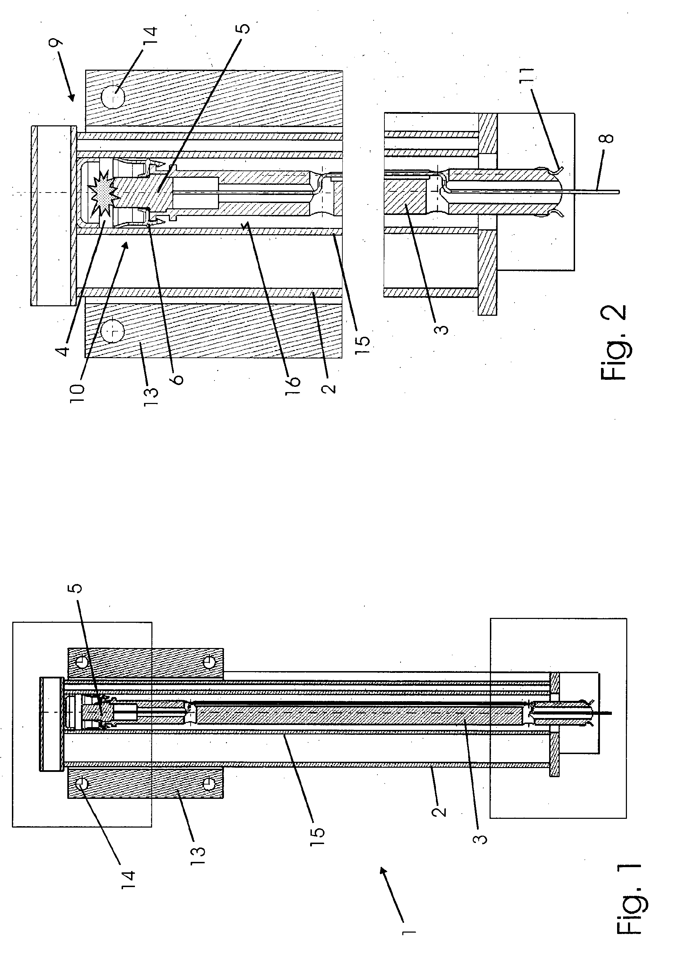

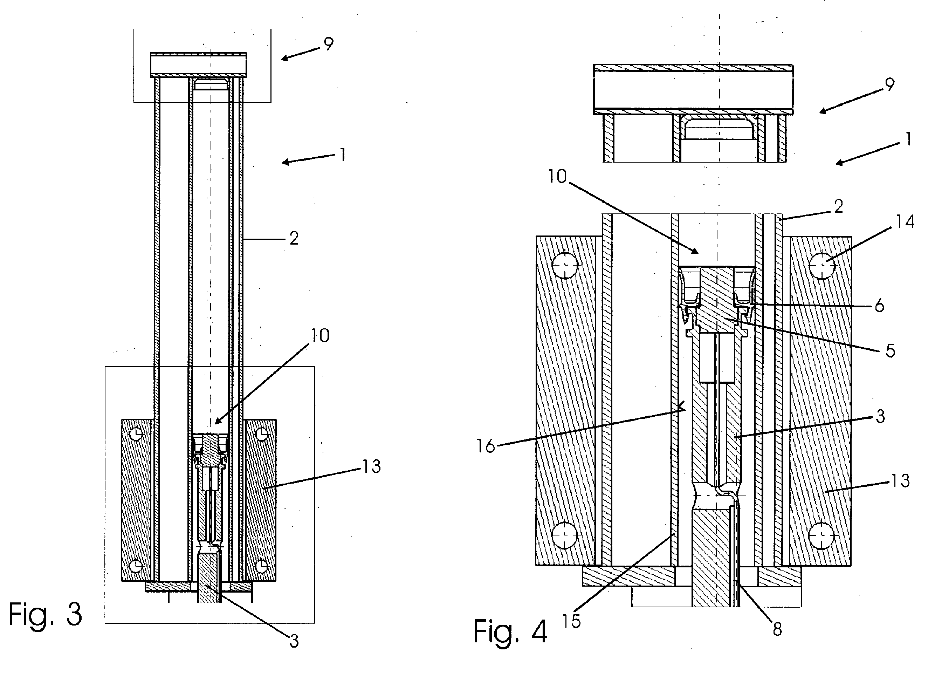

In Fig. 1 und 2 ist in einer Schnittdarstellung ein Überrollschutzsystem 1 mit einem Überrollkörper 2 und einem den Überrollkörper 2 führender Führungskolben 3 in einer Lagerungsposition des Überrollschutzsystems 1 dargestellt. Der Führungskolben 3 ist dabei innerhalb einer Hülse 15 angeordnet, welche ihrerseits in dem als Hohlkörper ausgebildeten Überrollkörper 2 angeordnet ist. Die Hülse 15 erstreckt sich dabei in der Ruhelage des Überrollkörpers 2 koaxial zum Führungskolben 3 und gewährleistet so eine Führung des Überrollkörpers aus der in Fig. 1 und 2 dargestellten Lagerungsposition in die in Fig. 3 und 4 dargestellte Überschlagsposition des Überrollschutzsystems 1.

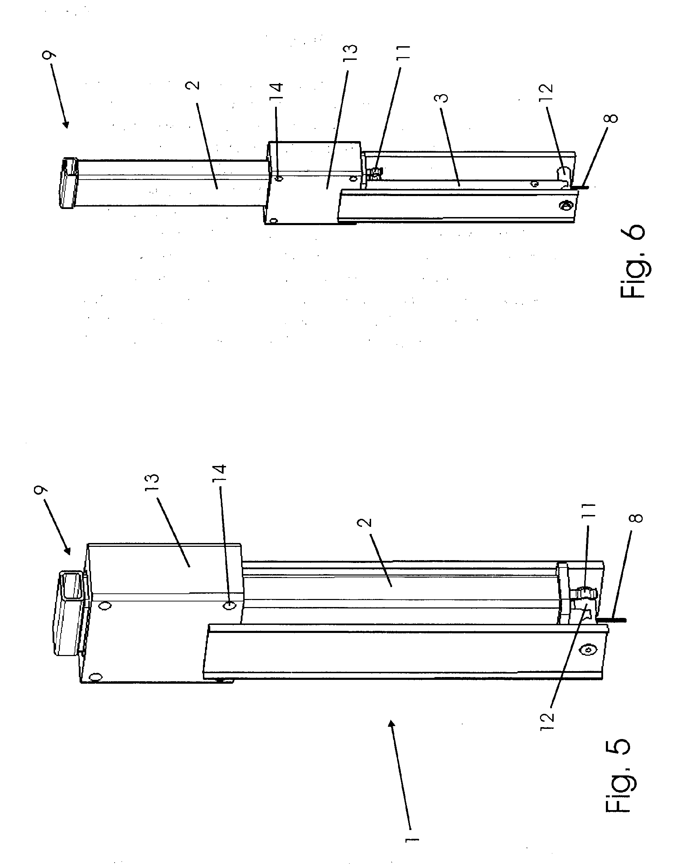

Der Führungskolben 3 weist an seinem oberen Ende 10, welches in der Lagerungsposition innerhalb der Hülse 15 im Kopfbereich 9 des Überrollkörpers 2 angeordnet ist, einen axial angeordneten Gasgenerator 5 auf, an dem wiederum koaxial ein Dichtungselement 6 angeordnet ist, welches im Querschnitt U-förmig ausgebildet mit seinen Außenflächen an den Innenflächen 16 der Hülse 15 anliegt. Der Gasgenerator 5, das Dichtungselement 6 sowie die Innenseite der Hülse 15 bilden einen Arbeitsraum 4, innerhalb dessen der Gasgenerator 5 angeordnet ist. Eine Auslösung des Gasgenerators 5 über die innerhalb des Führungskolbens 3 verlaufenden Anschlussleitungen 8 erzeugt einen Druckaufbau innerhalb des Arbeitsraumes 4, wodurch der Überrollkörper 2 aus seiner in Fig. 1, 2 und 3 dargestellten Lagerungsposition in die in Fig. 3, 4 und 5 dargestellte Überschlagsposition gelangt. Der sich einstellende Druck ist dabei ausreichend, um eine vollständige Verstellung zu bewirken und auch die in der Lagerungsposition bestehende Verbindung des Überrollkörpers über Federklammern 11, welche an einer Federklammeraufnahme 12 befestigt sind, aufzulösen.

Zur Befestigung des Überrollschutzsystems 2 dient eine Kassette 13, welche Befestigungsöffnungen 14 zur Aufnahme hier nicht dargestellter Befestigungsschrauben aufweist.

## Patentansprüche

1. Überrollschutzsystem für Kraftfahrzeuge, mit
- einer am Kraftfahrzeug anordbaren Führungseinheit,
- einem zwischen einer Lagerungsposition und einer Überschlagsposition verstellbar an der Führungseinheit gelagerten Überrollkörper und
- einer den Überrollkörper im Bedarfsfall aus der Lagerungsposition in die Überschlagsposition verstellenden Antriebseinheit, wobei der Überrollkörper (2) und die Führungseinheit (3) derart ausgebildet sind, dass diese in der Lagerungsposition einen abgegrenzten Arbeitsraum (4) bilden, wobei in dem Arbeitsraum (4) ein die Antriebseinheit bildender Gasgenerator (5) angeordnet ist,
dadurch **gekenneichnet, dass**
die Führungseinheit (3) durch einen Führungskolben (3) gebildet ist, der sich mit seinem oberen Ende (10) im Inneren des Überrollkörpers (2) bis in dessen Kopfbereich (9) erstreckt.

2. Überrollschutzsystem nach Anspruch 1, **dadurch gekennzeichnet, dass** der Arbeitsraum (4) im Bereich eines Endes des Überrollkörper (2) ausgebildet ist.

3. Überrollschutzsystem nach Anspruch 1 oder 2, **dadurch gekennzeichnet, dass** der Gasgenerator (5) an der Führungseinheit (3) angeordnet ist.

4. Überrollschutzsystem nach einem dcrvorhergehenden Anspruche, **gekennzeichnet durch** einen an dem einen von Führungseinhcit (3) und Überrollkörper (2) angeordneten, und an dem anderen von Führungseinheit (3) und Überrollkörper (2) anliegenden, den Arbeitsraum (4) abgrenzenden Dichtungselement (6).

5. Überrollschutzsystem nach einem der vorhergehenden Ansprüche, **dadurch gekennzeichnet, dass** das Dichtungselement (6) derart ausgebildet ist, dass es in Folge einer Druckerhöhung in dem Arbeitsraum (4) an das andere von Führungseinheit (3) und Überrollkörper (2) angepresst wird.

6. Überrollschutzsystem nach einem der vorhergehenden Ansprüche, **dadurch gekennzeichnet, dass** das Dichtungselement (6) topfartig ausgebildet am oberen Ende (10) des Führungskolbens (3) befestigt und mit seiner Außenfläche an der Innenseite (16) einer im Inneren des Überrollkörpers (2) angeordneten Hülse (15) anliegt.

7. Überrollschutzsystem nach einem der vorhergehenden Ansprüche, **dadurch gekennzeichnet, dass** der Gasgenerator (5) im Bereich des oberen Endes (10) des Führungskolbens (3), vorzugsweise mittig, innerhalb des durch das Dichtungselement (6) abgegrenzten Arbeitsraum (4) angeordnet ist

8. Überrollsehutzsystem nach einem der vorhergehenden Ansprüche, **dadurch gekennzeichnet, dass** eine Anschlussleitung (8) des Gasgenerators (5) innerhalb des Führungskolben (3) verläuft.

9. Überrollschutzsystem nach einem der vorhergehenden Absprüche, **dadurch gekennzeichnet, dass** Haltemittel (11) zur Arretierung des Überrollkörper (2) in der Ruhelage vorgesehen sind.

10. Überrollschutzsystem nach einem der vorhergehenden Ansprüche, **dadurch gekennzeichnet, dass** die Haltemittel durch eine an dem Überrollkörper (2) angeordnete Federklammer (11) gebildet ist, die in der Ruhelage den Überrollkörper (2) an einer Federklammeraufnahme (12) befestigt.

11. Überrollschutzsystem nach einem der vorhergehenden Ansprüche, **dadurch gekennzeichnet, dass** Arretierungsmittel zur Sicherung des Überrollkörpers(2)in der Überschlagsposition vorgesehen sind.

## Claims

1. A rollover protection system for motor vehicles comprising:
- a guide unit that can be arranged on the motor vehicle,
- a rollover body that is adjustably mounted on the guide unit between a storage position and a rollover position, and
- a drive unit that can move the rollover body from the storage position into the rollover position when necessary, wherein the rollover body (2) and the guide unit (3) are designed such that they form a delimited working space (4) in the storage position, wherein a gas generator (5) forming the drive unit is arranged in the working space (4),
**characterized in that**
the guide unit (3) is formed by a guide piston (3), the top end (10) of which extends into the interior of the rollover body (2) up to its head area (9).

2. The rollover protection system according to claim 1, **characterized in that** the working space (4) is formed in the area of one end of the rollover body (2).

3. The rollover protection system according to claim 1 or 2, **characterized in that** the gas generator (5) is arranged on the guide unit (3).

4. The rollover protection system according to one of the preceding claims, **characterized by** a sealing element (6) arranged on one out of the guide unit (3) and the rollover body (2) and abutting the other out of the guide unit (3) and the rollover body (2), and delimiting the working space (4).

5. The rollover protection system according to one of the preceding claims, **characterized in that** the sealing element (6) is designed such that it is pressed against the other out of the guide unit (3) and the rollover body (2) as a result of an increase in pressure in the working space (4).

6. The rollover protection system according to one of the preceding claims, **characterized in that** the sealing element (6) is attached shaped in a pot-like manner to the top end (10) of the guide piston (3), and abuts with its outer surface the inner surface (16) of a sleeve (15) arranged in the interior of the rollover body (2).

7. The rollover protection system according to one of the preceding claims, **characterized in that** the gas generator (5) is arranged in the area of the top end (10) of the guide piston (3), preferably in the middle, within the working space (4) delimited by the sealing element (6).

8. The rollover protection system according to one of the preceding claims, **characterized in that** a connecting line (8) of the gas generator (5) runs within the guide piston (3).

9. The rollover protection system according to one of the preceding claims, **characterized in that** retaining means (11) are provided to lock the rollover body (2) in the resting position.

10. The rollover protection system according to one of the preceding claims, **characterized in that** the retaining means are formed by a spring clip (11) arranged on the rollover body (2) that attaches the rollover body (2) to a spring clip holder (12) in the resting position.

11. The rollover protection system according to one of the preceding claims, **characterized in that** locking means are provided to secure the rollover body (2) in the rollover position.

## Revendications

1. Système de protection contre les tonneaux pour véhicules automobiles, avec
- une unité de guidage pouvant être disposée sur le véhicule automobile,
- un corps de protection contre les tonneaux supporté sur l'unité de guidage d'une façon pouvant être réglée entre une position de stockage et une position de retournement, et
- une unité d'entraînement déplaçant le corps de protection contre les tonneaux en cas de besoin à partir de la position de stockage vers la position de retournement, le corps de protection contre les tonneaux (2) et l'unité de guidage (3) étant constitués de telle sorte qu'ils forment dans la position de stockage un espace de travail (4) délimité, un générateur de gaz (5) formant l'unité d'entraînement étant disposé dans l'espace de travail (4),
**caractérisé en ce que**
l'unité de guidage (3) est formé d'un piston de guidage (3) qui s'étend, par son extrémité supérieure (10), dans l'intérieur du corps de protection contre les tonneaux (2) jusque dans sa zone de tête (9).

2. Système de protection contre les tonneaux selon la revendication 1, **caractérisé en ce que** l'espace de travail (4) est constitué dans la zone d'une extrémité du corps de protection contre les tonneaux (2).

3. Système de protection contre les tonneaux selon la revendication 1 ou 2, **caractérisé en ce que** le générateur de gaz (5) est disposé sur l'unité de guidage (3).

4. Système de protection contre les tonneaux selon une des revendications précédentes, **caractérisé par** un élément d'étanchéité (6) disposé sur un élément parmi l'unité de guidage (3) et le corps de protection contre les tonneaux (2) et adjacent à l'autre élément parmi l'unité de guidage (3) et le corps de protection contre les tonneaux (2), et délimitant l'espace de travail (4).

5. Système de protection contre les tonneaux selon une des revendications précédentes, **caractérisé en ce que** l'élément d'étanchéité (6) est constitué de telle sorte que, sous l'action d'une augmentation de pression dans l'espace de travail (4), il est pressé contre l'autre élément parmi l'unité de guidage (3) et le corps de protection contre les tonneaux (2).

6. Système de protection contre les tonneaux selon une des revendications précédentes, **caractérisé en ce que** l'élément d'étanchéité (6), constitué en forme de pot, est fixé à l'extrémité supérieure (10) du piston de guidage (3) et est, par sa surface extérieure, adjacent au côté intérieur (16) d'un manchon (15) disposé à l'intérieur du corps de protection contre les tonneaux (2).

7. Système de protection contre les tonneaux selon une des revendications précédentes, **caractérisé en ce que** le générateur de gaz (5) est disposé dans la zone de l'extrémité supérieure (10) du piston de guidage (3), de préférence de façon centrée, à l'intérieur de l'espace de travail (4) délimité par l'élément d'étanchéité (6).

8. Système de protection contre les tonneaux selon une des revendications précédentes, **caractérisé en ce qu'**une conduite de raccordement (8) du générateur de gaz (5) court à l'intérieur du piston de guidage (3).

9. Système de protection contre les tonneaux selon une des revendications précédentes, **caractérisé en ce qu'**il est prévu des moyens de retenue (11) pour arrêter le corps de protection contre les tonneaux (2) dans la position de repos.

10. Système de protection contre les tonneaux selon une des revendications précédentes, **caractérisé en ce que** les moyens de retenue sont formés par un crampon à ressort (11) qui est disposé sur le corps de protection contre les tonneaux (2) et qui, dans la position de repos, fixe le corps de protection contre les tonneaux (2) sur un logement de crampon à ressort (12).

11. Système de protection contre les tonneaux selon une des revendications précédentes, **caractérisé en ce qu'**il est prévu des moyens d'arrêt pour bloquer le corps de protection contre les tonneaux (2) dans la position de retournement.
